# EUROPEAN PATENT APPLICATION

(11) **EP 4 421 728 A1**
(43) Date of publication of application: **28.08.2024**
(21) Application number: 23158600.9
(22) Date of filing: 24.02.2023
(51) Int. Cl.: G06T 5/00, G06T 5/10, G06T 3/40

(54) **CONSTRUCTION OF A DIGITAL IMAGE DEPICTING A SAMPLE**

(71) Applicant: CellaVision AB, 223 62 Lund (SE)
(72) Inventor: Almers, Martin, 226 51 LUND (SE); Hedlund, Sven, 226 57 LUND (SE); Jönsson, Jesper, 224 80 LUND (SE)
(74) Representative: AWA Sweden AB

(57) **Abstract**

The present inventive concept relates to a method and a device for training a machine learning model to construct a digital image depicting a sample. The method comprising: receiving (S300) a training set of digital images of a training sample, wherein the training set of digital images is acquired (S310) using a first imaging system (100) by: illuminating (S312) the training sample with a plurality of illumination patterns, and capturing (S314) a digital image for each illumination pattern of the plurality of illumination patterns; receiving (S320) a ground truth comprising a digital image depicting the training sample, wherein the digital image of the ground truth is acquired (S330) using a second imaging system (200) exhibiting a lower level of imaging errors than the first imaging system (100); and training (S340) the machine learning model to construct a digital image depicting a sample using the received training set of digital images and the received ground truth. The present inventive concept further relates to a method and a microscope arrangement for constructing a digital image depicting a sample.

## Description

### Technical field

The present inventive concept relates to construction of a digital image depicting a sample.

### Background of the invention

In the field of digital microscopy, a typical task is to find and identify objects within a sample. For instance, within hematology, cytology, and pathology, specific cell types may be found and identified in order to establish a diagnose for the patient from which the sample is taken.

There exist different techniques for imaging samples. One of the simplest forms of digital microscopy is bright-field microscopy where the sample is illuminated from below by white light and imaged from above. Typically, images of the samples are often of very high quality, i.e., they replicate the sample to a very high degree. However, in order to produce such high-quality images of samples, the microscope system used must typically be complex. For instance, optical and digital errors in the imaging must be reduced such that the high-quality images can be captured. This is typically done by using very complex optics (i.e., complex microscope objectives) and high-performance image sensors in the microscope system. However, a drawback with such microscope systems is that the increased complexity and performance typically leads to higher economic costs. A further drawback is that complex microscope systems typically are more sensitive to misalignments of the microscope system. For instance, in case there is a relative misalignment between the microscope objective and other optics (e.g., relay lenses), the image sensor, and/or the imaged sample, the captured images of the sample can be of lower quality. In turn, this increases a risk that patient is incorrectly diagnosed.

### Summary of the invention

In view of the above, it is an object of the present inventive concept to provide a method and device for training a machine learning model to construct a digital image depicting a sample.

A further object is to provide a method and microscope arrangement for constructing a digital image depicting a sample.

A further object is to, at least partly, mitigate, alleviate or eliminate one or more of the above-identified deficiencies in the art.

According to a first aspect a method for training a machine learning model to construct a digital image depicting a sample is provided. The method comprising: receiving a training set of digital images of a training sample, wherein the training set of digital images is acquired using a first imaging system by: illuminating the training sample with a plurality of illumination patterns, and capturing a digital image for each illumination pattern of the plurality of illumination patterns; receiving a ground truth comprising a digital image depicting the training sample, wherein the digital image of the ground truth is acquired using a second imaging system exhibiting a lower level of imaging errors than the first imaging system; and training the machine learning model to construct a digital image depicting a sample using the received training set of digital images and the received ground truth.

Within the context of this disclosure, the wording "training" as in "training sample" should be construed as a sample used during training of the machine learning model, as opposed to a general sample which the trained machine learning model is capable of constructing a digital image of. The constructed digital image may then depict the general sample. The machine learning model may, of course, be able to construct a digital image depicting the training sample. The machine learning model may also be able to construct digital images of other samples as well, which may not be part of the training set of digital images. Put differently, the machine learning model may, after training, be able to construct digital images of samples not used for training the machine learning model. Simply "the sample" may be used herein to refer to either the samples used during training or the samples input into the trained machine learning model, depending on the context.

Within the context of this disclosure, the wording "illumination patterns" may be construed as different ways of illuminating the sample using the illumination system. Each illumination pattern may, e.g., be formed by simultaneously illuminating the sample from one or more directions of a plurality of directions, and/or by varying the number of light sources of illumination system that emit light.

Within the context of this disclosure, the wording "ground truth" should be construed as information that is known to be real and/or true. Hence, in this context, since the machine learning model is trained to construct a digital image using the ground truth and the training set of digital images, the ground truth may represent a digital image depicting the training sample. Such digital image depicting the training sample may be acquired or captured using conventional techniques.

The machine learning model may be trained to correlate the training set of digital images to the ground truth (e.g., the digital image depicting the training sample). The machine learning model may be trained iteratively and/or recursively until a difference between an output of the machine learning model (i.e., the constructed digital image) and the ground truth (i.e., the digital image depicting the training sample) is smaller than a predetermined threshold. A smaller difference between the output of the machine learning model and the ground truth may indicate a higher accuracy of the constructed digital image provided by the machine learning model. Put differently, a smaller difference between the output of the machine learning model and the ground truth may indicate that the constructed digital image may to a higher degree replicate a digital image depicting the training sample. Hence, preferably, the difference between the output of the machine learning model and the ground truth may be minimized. The machine learning model may be trained to construct digital images of samples for a plurality of different sample types. In such case, the machine learning model may, for each sample type, be trained using a training set of digital images of a training sample of the sample type, and a corresponding ground truth associated with the respective sample type.

By illuminating the training sample with a plurality of illumination patterns and capturing a digital image for each of the plurality of illumination patterns, phase information (typically referred to as quantitative phase within the art) associated with the training sample may be determined. This can be understood as information of different portions of Fourier space (i.e., the spatial frequency domain) associated with the training sample being captured for different illumination directions. This technique may be known in the art as Fourier Ptychographic Microscopy, FPM. The phase information may, in turn, be used to replicate the training sample at different focus positions (i.e., positions of the training sample relative to an image-forming assembly of the first imaging system used to capture digital images of the training sample). For instance, even though the training set of digital images is acquired using the first imaging system which exhibits a relatively large degree of imaging errors (compared to the second imaging system), the training set of digital images comprises phase information that may be used to construct a digital image depicting the training sample which is similar to a digital image captured using the second imaging system. This, since the training sample is illuminated with the plurality of illumination patterns when the training set is acquired. Further, information regarding a refractive index (or a spatial distribution of a refractive index) associated with the training sample may be captured. This can be understood as an effect of refraction of light being dependent on an angle of incident for light illuminating the training sample and the refractive index of the training sample. Furthermore, by illuminating the training sample with a plurality of illumination patterns and capturing a digital image for each illumination pattern of the plurality of illumination patterns, information regarding finer details of the training sample may be captured than what normally is resolvable by, e.g., a conventional microscope used to image the training sample.

Hence, since the training set of digital images comprises information associated with one or more of fine details of the training sample, a refractive index associated with the training sample, and phase information associated with the training sample, this information may be used in the training of the machine learning model, which may, in turn, allow for a machine learning model being trained to construct a digital image depicting the training sample more accurately than what would be allowed in case the training set of digital images was captured using the first imaging system and by using a single illumination pattern (e.g., conventional bright-field illumination, conventional dark-field illumination, or from a single direction) or by using conventional microscopy. Using conventional microscopy, it may be difficult, or even impossible, to capture information associated with the refractive index associated with the training sample and/or phase information associated with the training sample. Put differently, since a digital image captured using conventional microscopy may simultaneously contain information regarding the refraction of light impinging from directions corresponding to overlapping portions of the Fourier space associated with the training sample, it may be impossible using such techniques to determine phase information associated with the training sample and/or information related to the refractive index of the training sample. Put differently, it may not be possible to determine such information related to the training sample using conventional microscopy. Illuminating the training sample with a plurality of illumination patterns may further allow for capturing information relating to details of the training sample which are finer than what normally (using conventional microscopy illumination) is allowed by the first imaging system used to capture the training set of digital images of the training sample. Thus, an imaging system having a relatively lower magnification may be used while still being able to capture information related to such fine details of the training sample. Using an imaging system having a relatively lower magnification may, in turn, allow for digital images of larger portions of the training sample to be captured at each imaging position. Hence, the entire training sample may be scanned by capturing digital images at relatively fewer positions which, in turn, may allow for a faster and/or more efficient scanning of the training sample.

A further associated advantage is that since the level of optical aberrations is lower for the second imaging system (i.e., in the digital image of the ground truth) compared to the first imaging system (i.e., in the digital images of the training set of digital images), the machine learning model may be trained to reduce (or preferably remove) such optical aberrations in the output (i.e., the constructed digital image).

Conventional techniques used when reconstructing images using FPM typically require that refractive index variations in the vicinity of the imaged sample (e.g., the training sample) are not too high, otherwise the reconstruction process using digital images of such sample cannot converge. This may, e.g., be an issue with samples having a structured (e.g., rough) surface. The refractive index of such sample may have a large variation along its surface. For instance, due to surface roughness there may be a many interfaces between sample and air in a plane close to the surface of the sample, leading to a large variation in refractive index along that plane. To counteract these problems, immersion oil and/or a cover glass is typically applied to the sample, whereby the surface of the sample may become less structured. Further, compared to the refractive index of air, the refractive index of immersion oil may typically be more similar to the refractive index of the sample. Advantageously, it has been found that by using a machine learning model trained according to the first aspect, the requirement regarding refractive index variations may not be as strict, whereby a need for immersion oil and/or cover glass may be reduced (or even removed).

An image-forming assembly of the second imaging system may exhibit a lower level of optical aberrations than an image-forming assembly of the first imaging system, whereby an image of an object at best focus formed by the image-forming assembly of the second imaging system may be more similar to the imaged object than an image of an object at best focus formed by the image-forming assembly of the first imaging system.

An associated advantage is that the image-forming assembly of the first imaging system may be less complex (e.g., fewer components) than the image-forming assembly of the second imaging system. This, in turn, may reduce economical costs associated with the first imaging system.

A further associated advantage is that the image-forming assembly of the first imaging system may comprise components of lower quality than the image-forming assembly of the second imaging system. This, in turn, may reduce economical costs associated with the first imaging system.

Thus, the trained machine learning model may allow for a less complex and/or less expensive imaging system to be used, while still being able to construct a digital image depicting a sample which is similar to a digital image depicting the sample captured using a more complex imaging system and/or a higher-quality imaging system (e.g., the second imaging system).

A number of imaging elements of the image-forming assembly of the first imaging system may be lower than a number of imaging elements of the image-forming assembly of the second imaging system, whereby the image-forming assembly of the second imaging system may have a lower level of optical aberrations than the image-forming assembly of the first imaging system. Put differently, the image-forming assembly of the second imaging system may exhibit a lower level of optical aberrations compared to the image-forming assembly of the first imaging system.

An associated advantage is that the image-forming assembly of the first imaging system may be less complex (e.g., fewer components) than the image-forming assembly of the second imaging system. This, in turn, may reduce economical costs associated with the first imaging system. Thus, the trained machine learning model may allow for a less complex and/or less expensive imaging system to be used, while still being able to construct a digital image depicting a sample which is similar to a digital image depicting the sample captured using a more complex imaging system and/or more expensive imaging system (e.g., the second imaging system).

The image-forming assembly of the second imaging system may comprise a microscope objective.

An associated advantage is that a quality and/or a resolution of the digital image of the ground truth may be enhanced. Typically, microscope objectives are constructed both for producing a magnified image of an object and for reducing (preferably minimize) imaging errors. Hence, using a digital image captured using a microscope objective may allow for the trained machine learning model to construct a digital image having a higher quality and/or resolution.

The image-forming assembly of the first imaging system may comprise one imaging element only.

An associated advantage is that the image-forming assembly of the first imaging system may be even less complex, i.e., comprising only one imaging element. This, in turn, may reduce economical costs associated with the first imaging system. Thus, the trained machine learning model may allow for a less complex and/or less expensive imaging system to be used, while still being able to construct a digital image depicting a sample which is similar to a digital image depicting the sample captured using a more complex imaging system and/or more expensive imaging system (e.g., the second imaging system).

The optical aberrations may be one or more of: spherical aberration; astigmatism; coma; image distortion; chromatic aberration; and Petzval field curvature.

An image sensor of the second imaging system compared to an image sensor of the first imaging system may exhibit one or more of: a larger number of pixels; a higher pixel resolution; a larger pixel size; a higher dynamic range; and a lower noise level.

An associated advantage is that the image sensor of the first imaging system may be less expensive than the image sensor of the second imaging system. Thus, the trained machine learning model may allow for a less expensive imaging system to be used, while still being able to construct a digital image depicting a sample which is similar to a digital image depicting the sample captured using a more expensive imaging system (e.g., the second imaging system).

The first imaging system may comprise a sample positioning assembly configured to move a sample along a first plane, and the second imaging system may comprise a sample positioning assembly configured to move a sample along a second plane which may exhibit a higher degree of planarity than the first plane. Put differently, when the sample is moved, an accuracy and/or a repeatability of a focal position of the sample (i.e., the position of the sample relative to the image-forming assembly of the imaging system) may be higher for the second imaging system compared to the first imaging system. Thus, the second imaging system may position the sample in focus with a higher accuracy and/or better repeatability than the first imaging system. This is advantageous, since the sample positioning assembly of the first imaging system may be less complex and/or less expensive than sample positioning assembly of the second imaging system. Thus, the trained machine learning model may allow for a less complex and/or less expensive imaging system to be used, while still being able to construct a digital image depicting a sample which is similar to a digital image depicting the sample captured using a more expensive imaging system (e.g., the second imaging system).

The first imaging system may comprise an illumination subsystem. The illumination subsystem may comprise a plurality of light sources, each light source of the plurality of light sources may be configured to illuminate the training sample from one direction of a plurality of directions; and wherein each illumination pattern of the plurality of illumination patterns may be formed by one or more light sources of the plurality of light sources.

An associated advantage is that the illumination subsystem of the first imaging system may be able to switch between different illumination patterns quicker and/or more reliably compared to an illumination subsystem comprising a single, movable light source capable of illuminating a position from different directions.

A further associated advantage is that the digital images of the training sample may be captured under different illumination conditions, whereby more information (e.g., information associated with a refractive index, etc.) of the training sample may be captured in the captured digital images.

At least one direction of the plurality of directions may correspond to an angle larger than a numerical aperture of an image-forming assembly of the first imaging system.

Within the context of this disclosure, the wording "numerical aperture of an image-forming assembly" should be construed as a dimensionless number associated with a range of angles over which the image-forming assembly accepts light. Hence, a direction corresponding to an angle larger than the numerical aperture of the image-forming assembly may be a direction corresponding to an angle outside of (e.g., larger than) the range of angles over which the image-forming assembly accepts light.

By illuminating the training sample from a direction corresponding to an angle larger than the numerical aperture of the image-forming assembly of the first imaging system, the digital image captured for that angle of illumination may comprise information about higher spatial frequencies of the training sample, and thereby finer details of the training sample, than the at image-forming assembly of the first imaging system normally allows (e.g., using conventional illumination). This may, in turn, allow the image-forming assembly of the first imaging system to capture phase information associated with the training sample and/or information relating to details of the training sample not normally being resolvable by the image-forming assembly of the first imaging system, which may be used in the training of the machine learning model. Put differently, illuminating the training sample from a direction corresponding to an angle larger than the numerical aperture of the image-forming assembly of the first imaging system may allow for an improved machine learning model capable of constructing a digital image depicting a sample.

Two or more directions of the plurality of directions may correspond to overlapping portions of a Fourier space associated with the training sample, and wherein each illumination pattern of the plurality of illumination patterns may be formed by illuminating the training sample from one or more directions corresponding to non-overlapping portions of the Fourier space associated with the training sample.

An associated advantage is that the training sample may be illuminated from several directions simultaneously, whereby an amount of information associated with the training sample which is captured in each captured digital image may be increased. This, in turn, may reduce a number of digital images needed while still allowing enough information (i.e., enough information for the training process and/or for the process of constructing a digital image using the trained machine learning model) associated with the training sample (or sample) to be captured. Reducing the number of digital images that need to be captured may reduce a time needed for image capturing, which may allow for a more time-efficient system for constructing a digital image depicting a sample. Further, reducing the number of captured digital images may also reduce memory requirements (e.g., memory needed to store the captured digital images) associated with the training process. Memory requirements associated with the process of constructing a digital image depicting a sample using the trained machine learning model may also be reduced for the same reasons. Further, by simultaneously illuminating the training sample from directions corresponding to non-overlapping portions of the Fourier space associated with the training sample, separate portions of that Fourier space may be sampled simultaneously. This may, in turn, reduce (or even avoid) entangling (mixing) the information (i.e., the information associated with the training sample) for the different directions.

According to a second aspect a method for constructing a digital image depicting a sample is provided. The method comprising: receiving an input set of digital images of a sample, wherein the input set of digital images is acquired using an imaging system and by: illuminating the sample with a plurality of illumination patterns, and capturing a digital image for each illumination pattern of the plurality of illumination patterns; inputting the input set of digital images into a machine learning model trained according to the method of the first aspect; and receiving, from the machine learning model, an output comprising the digital image depicting the sample.

By using the machine learning model trained according to the method of the first aspect, a digital image depicting the sample having a higher quality than what the imaging system used to acquire the input set of digital images normally is capable of (e.g., using conventional illumination) can be constructed. This, in turn, may allow the imaging system used to acquire the input set to be of lower performance. For instance, the imaging system may exhibit a relatively high level of imaging errors (e.g., due to optical aberrations in an image-forming assembly of the imaging system) whereas the constructed digital image depicting the sample may be more similar to a digital image captured using an imaging system exhibiting a lower level of imaging errors. The plurality of illumination patterns used when acquiring the input set of digital images may be substantially the same as (or even identical to) the plurality of illumination patterns used when acquiring the training set of digital images which is used when training the machine learning model according to the method of the first aspect. The plurality of illumination patterns used when acquiring the input set of digital images may be a subset of the plurality of illumination patterns used when acquiring the training set of digital images used when training the machine learning model according to the method of the first aspect.

The above-mentioned features of the first aspect, when applicable, apply to this second aspect as well. In order to avoid undue repetition, reference is made to the above.

According to a third aspect a device for training a machine learning model to construct a digital image depicting a sample is provided. The device comprising circuitry configured to execute: a first receiving function configured to receive a training set of digital images, wherein the training set of digital images is acquired using a first imaging system and by: illuminating a training sample with a plurality of illumination patterns, and capturing a digital image of the training sample for each illumination pattern of the plurality of illumination patterns; a second receiving function configured to receive a ground truth comprising a digital image depicting the training sample, wherein the digital image of the ground truth is acquired using a second imaging system exhibiting a lower level of imaging errors than the first imaging system; and a training function configured to train a machine learning model to construct a digital image depicting a sample using the received training set of digital images and the received ground truth.

The device may be configured to train the machine learning model in accordance with the method of the first aspect.

The above-mentioned features of the first aspect and/or the second aspect, when applicable, apply to this third aspect as well. In order to avoid undue repetition, reference is made to the above.

According to a fourth aspect a microscope arrangement is provided. The microscope arrangement comprising: an imaging system comprising: an image sensor, an image-forming assembly configured to image a sample onto the image sensor, and an illumination subsystem configured to illuminate a sample from a plurality of directions; and circuitry configured to execute: an acquisition function configured to acquire an input set of digital images by being configured to: control the illumination subsystem to illuminate the sample with a plurality of illumination patterns, and control the image sensor to capture a digital image for each illumination pattern of the plurality of illumination patterns; and an image construction function configured to: input the input set of digital images into a machine learning model being trained according to the method of the first aspect, and receive, from the machine learning model, an output comprising the digital image depicting the sample.

The above-mentioned features of the first aspect, the second aspect, and/or the third aspect, when applicable, apply to this fourth aspect as well. In order to avoid undue repetition, reference is made to the above.

According to a fifth aspect a non-transitory computer-readable storage medium is provided. The non-transitory computer-readable storage medium comprising program code portions which, when executed on a device having processing capabilities, performs the method according to first aspect or the method according to the second aspect.

The above-mentioned features of the first aspect, the second aspect, the third aspect, and/or the fourth aspect, when applicable, apply to this fifth aspect as well. In order to avoid undue repetition, reference is made to the above.

Further features of, and advantages with, the present inventive concept will become apparent when studying the appended claims and the following description. The skilled person will realize that different features of the present inventive concept may be combined to create variants other than those described in the following, without departing from the scope of the present inventive concept.

### Brief description of the drawings

The aspects of the present inventive concept, including its particular features and advantages, will be readily understood from the following detailed description and the accompanying drawings, in which:
Figure 1A illustrates schematic of a microscope arrangement suitable to acquire a training set of digital images for training a machine learning model and/or an input set of digital images for constructing a digital image depicting a sample using a trained machine learning model.
Figure 1B illustrates a schematic of a second imaging system suitable for acquiring a digital image of a ground truth.
Figure 2 illustrates a schematic of a device for training a machine learning model to construct a digital image depicting a sample.
Figure 3A is a block scheme of a method for training a machine learning model to construct a digital image depicting a sample.
Figure 3B is a block scheme of method steps for acquiring training sets of digital images for training the machine learning model.
Figure 3C is a block scheme of method steps for acquiring a digital image of the ground truth for training the machine learning model.
Figure 4A is a block scheme of a method for constructing a digital image depicting a sample.
Figure 4B is a block scheme of method steps for acquiring input sets of digital images for constructing the digital image depicting a sample.
Figure 5 is a schematic illustration of a non-transitory computer-readable storage medium.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

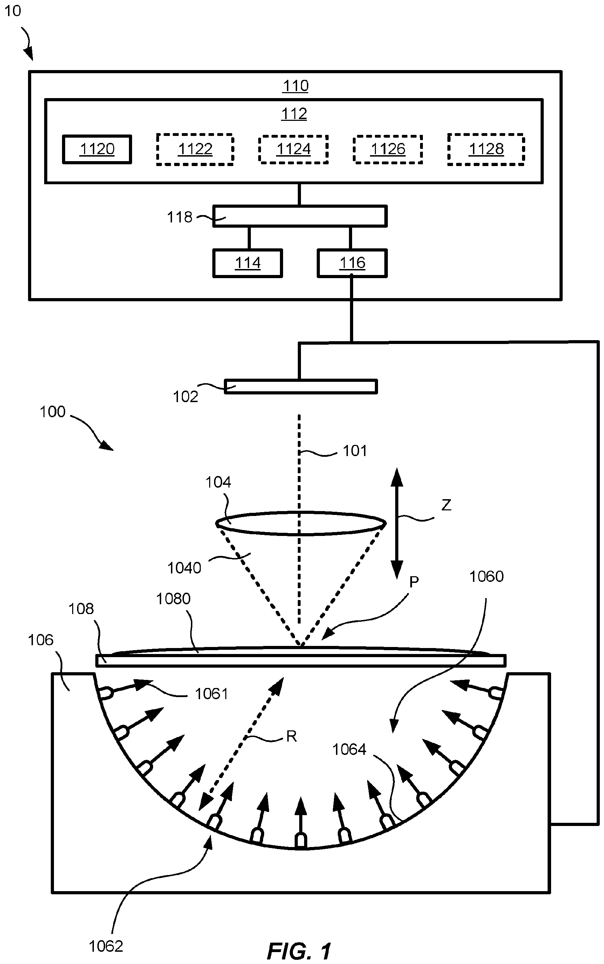

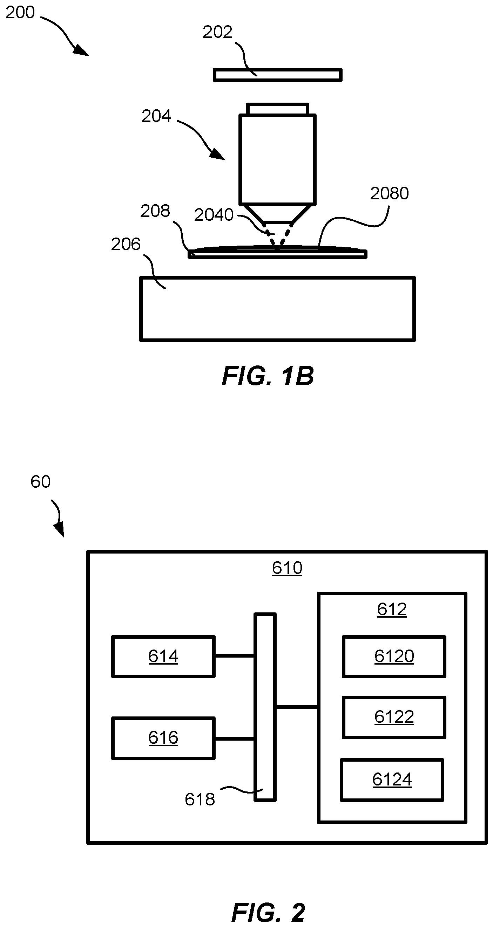

A microscope system 10 suitable for acquiring a set of digital images which may be used as a training set of digital images when training a machine learning model to construct a digital image depicting a sample and/or as an input set of digital images when using a trained machine learning model to construct a digital image depicting a sample will now be described with reference to Fig. 1A and Fig. 1B.

Figure 1A is a schematic illustration of a microscope arrangement 10. As is seen in Fig. 1A, the microscope arrangement 10 comprises an imaging system 100 and circuitry 110. The imaging system 100 comprises an image sensor 102, an image-forming assembly 104, and an illumination subsystem 106.

The imaging system 100 may further comprise a sample positioning assembly 108. The sample positioning assembly 108 may be configured to hold a sample 1080. The sample 1080 may be a biological sample. The sample 1080 may be a cytological sample. Examples of biological samples comprise, but are not excluded to, blood, plasma, bone marrow fluid, etc. The sample may be a non-biological sample. The non-biological sample may be a manmade sample or a naturally occurring sample. Examples of non-biological samples comprise, but are not excluded to, integrated circuits, optical components, microstructures, minerals, metals, etc. The sample positioning assembly 108 may be configured to move the sample 1080. The sample positioning assembly 108 may be configured to move the sample 1080 along a plane. A normal of that plane may be substantially parallel to an optical axis 101 of the imaging system 100. It is further to be understood that the sample positioning assembly 108 may be configured to move the sample in a direction substantially parallel to the optical axis 101 of the imaging system 100. Put differently, the sample positioning assembly 108 may be configured to move the sample 1080 in a focusing direction of the imaging system 100. The circuitry 110 may be configured to control the sample positioning assembly 108. For instance, the circuitry 110 may be configured to execute a sample positioning function 1124. The sample positioning function 1124 may be configured to control the position of the sample 1080 using the sample positioning assembly 108.

Even though the circuitry 110 is illustrated as a separate entity in Fig. 1A, it is to be understood that the circuitry 110 may form part of an electronic device. The electronic device may, e.g., be a computer, a server, a smartphone, etc. The electronic device may be a local electronic device (i.e., arranged in proximity to the imaging system 100) or a remote electronic device. Non-limiting examples of a remote electronic device may be a server, a cloud server, a remote computer, a remote smartphone, etc. It is further to be understood that the functionality of the circuitry 110 may be distributed over more than one electronic device. The electronic device may comprise further components, for example input devices (mouse, keyboard, touchscreen, etc.) and/or a display. As is illustrated in Fig. 1A, the circuitry 110 may comprise one or more of a memory 112, a processing unit 114, a communication interface 116, and a data bus 118. The memory 112, the processing unit 114, and the communication interface 116 may communicate (e.g., exchange data) via the data bus 118. The processing unit 114 may comprise a central processing unit (CPU) and/or a graphical processing unit (GPU). The communication interface 116 may be configured to communicate with external devices. For example, the communication interface 116 may be configured to communicate with servers, computers, external peripherals (e.g., external storage), etc. The external devices may be local devices or remote devices (e.g., a cloud server). The communication interface 116 may be configured to communicate with the external devices via an external network (e.g., a local-area network, the internet, etc.). The communication interface 116 may comprise a transceiver. The communication interface 116 may be configured for wireless and/or wired communication. Suitable technologies for wireless communication are known to the skilled person. Some non-limiting examples comprise Wi-Fi and Near-Field Communication (NFC). Suitable technologies for wired communication are known to the skilled person. Some non-limiting examples comprise USB, Ethernet, and Firewire.

The memory 112 may be a non-transitory computer-readable storage medium. The memory 112 may be a random-access memory. The memory 112 may be a non-volatile memory. As is illustrated in the example of Fig. 1A, the memory 112 may store program code portions 1120, 1122, 1124, 1126, 1128 corresponding to one or more functions. The program code portions 1120, 1122, 1124, 1126, 1128 may be executable by the processing unit 114, which thereby performs the functions. Hence, when it is referred to that the circuitry 110 is configured to execute a specific function, the processing unit 114 may execute program code portions 1120, 1122, 1124, 1126, 1128 corresponding to the specific function which may be stored on the memory 112. However, it is to be understood that one or more functions of the circuitry 110 may be hardware implemented and/or implemented in a specific integrated circuit. For example, one or more functions may be implemented using field-programmable gate arrays (FPGAs). Hence, one or more functions of the circuitry 110 may be implemented in hardware or software, or as a combination of the two.

Even though the image sensor 102 is illustrated as a separate entity in Fig. 1A, it is to be understood that the image sensor 102 may form part of camera. The image sensor 102 may comprise a charge-coupled device (CCD) sensor or a complementary metal-oxide-semiconductor (CMOS) sensor. The image sensor 102 may be capable of capturing digital color images. To that end, the image sensor 102 may comprise a color filter (e.g., a Bayer filter) to allow the image sensor 102 to capture color information of light impinging on the image sensor 102. As is illustrated in the example of Fig. 1A, the image sensor 102 may communicate with the circuitry 110 via the communication interface 116. However, it is to be understood that the image sensor 102 may communicate with the circuitry 110 via the data bus 118.

The image-forming assembly 104 is configured to image the sample 1080 onto the image sensor 102. For example, the image-forming assembly 104 may be positioned such that an object plane of the image-forming assembly 104 coincides with the sample 1080 and an image plane of the image-forming assembly 104 coincides with the image sensor 102. It is to be understood that whether an image depicting the sample 1080 is formed on the image sensor 102 may depend on the illumination of the sample 1080. For instance, in case the sample 1080 is illuminated similarly to conventional microscope illumination (e.g., brightfield illumination), an image resembling the sample 1080 may be formed on the image sensor 110. However, in case the sample 1080 is illuminated with light from only a few directions, or even a single direction, the image forming on the image sensor 102 may not resemble the sample 1080. For instance, the sample 1080 may be illuminated with light from one or more directions corresponding to angles larger than a numerical aperture 1040 of the image-forming assembly 104. In such case, the image formed on the image sensor 102 may not resemble the sample 1080. However, even though the images may not resemble (or depict) the sample 1080, those images may comprise information associated with the sample 1080 and that information may be used when training the machine learning model and/or when using a trained machine learning model to construct the digital image depicting a sample.

The image-forming assembly 104 may be movable along a direction Z substantially parallel to the optical axis 101 of the imaging system 100. Put differently, the image-forming assembly 104 may be movable in a focusing direction of the imaging system 100. The image-forming assembly 104 may be movable along the direction Z by being coupled to a manual and/or motorized stage (not illustrated). The image-forming assembly 104 and/or the sample positioning assembly 108 may be movable such that a focused image of the sample 1080 may be captured by the image sensor 102. A position of the image-forming assembly 104 along the direction Z may be controlled by the circuitry 110. For example, the circuitry 110 may be configured to execute a focus function 1126 configured to adjust a position of the image-forming assembly 104 along the direction Z. The focus function 1126 may be configured to automatically adjust the position of the image-forming assembly 104 along the direction Z. Put differently, the focus function 1126 may be an autofocus function. The focus function 1126 may, as in the example of Fig. 1A, control the position of the image-forming assembly 104 along the direction Z by communicating via the communication interface 116. However, it is to be understood that the focus function 1126 may control that position by communicating via the data bus 118.

The image-forming assembly 104 may comprise a microscope objective (not illustrated in Fig. 1A). The image-forming assembly 104 may comprise one or more imaging elements. In this context, the one or more imaging elements may be one or more elements configured to image the sample 1080 onto the image sensor 102. For instance, the one or more imaging elements may comprise one or more of a pinhole, and an optical lens. The one or more imaging elements may be one or more refractive optical elements. The one or more imaging elements may comprise one or more optical lenses, e.g., in the form of a microscope objective or a lens assembly. As illustrated in the example of Fig. 1A, the image-forming assembly 104 of the imaging system 100 may comprise one imaging element only. For example, the image-forming assembly 104 may comprise one optical lens only. The image-forming assembly 104 may thereby be of low complexity. This, in turn, may reduce economical costs associated with the imaging system 100. However, it is to be understood that the imaging system 100 may comprise further components, e.g., one or more of an aperture, a window, color filters, etc. Such further components are not to be regarded as an imaging element within the context of this application. For instance, an imaging system 100 comprising a window and an image-forming assembly 104 consisting of one optical lens only should be construed as comprising one imaging element only.

The illumination subsystem 106 is configured to illuminate the sample 1080 from a plurality of directions 1060. The illumination subsystem 106 may comprise a plurality of light sources 1062. The plurality of light sources 1062 may, as is illustrated in the example of Fig. 1A, be arranged on a curved surface 1064. As illustrated in the example of Fig. 1A, the curved surface 1064 may be concave along at least one direction along the surface 1064. For example, the curved surface 1064 may be a cylindrical surface. The curved surface 1064 may be concave along two perpendicular directions along the surface. For example, the curved surface 1064 may have a shape similar to a segment of a sphere. A segment of a sphere may be a spherical cap or a spherical dome. Arranging the plurality of light sources 1062 on a curved surface 1064 may be advantageous in that a distance R from each light source to a current imaging position P of the imaging system 100 may be similar. Since this distance R is similar, an intensity of light emitted from each light source of the plurality of light sources 1062 may be similar at the current imaging position P. This may be understood as an effect of the inverse square law. Thus, the sample 1080 may be illuminated by light having similar intensities for each direction in the plurality of directions 1060, which may, in turn, allow for a more similar illumination of the sample 1080 independent of illumination direction. The distance R from each light source to the current imaging position P may be in a range from 4 cm to 15 cm. It may be advantageous to configure the illumination subsystem 106 such that the distance R from each light source to the current imaging position P is large enough such that each light source may be treated as a point source. Hence, the distance R from each light source to the current imaging position P may be larger than 15 cm, given that an intensity of light from each light source at the current imaging position P is high enough to produce the set of digital images. However, it is to be understood that the plurality of light sources 1062 may be arranged on a flat surface or on a surface having an irregular shape. It is further to be understood that Fig. 1A illustrates a cross section of the microscope arrangement 10, and in particular the illumination subsystem 106. Hence, the curved surface 1064 of the illumination subsystem 106 illustrated in Fig. 1A may be a cylindrical surface or a portion of a spherical surface (or of a quasi-spherical surface). The curved surface 1064 of the illumination subsystem 106 may be bowl shaped. The curved surface 1064 may be formed of facets (not shown). Put differently, the curved surface 1064 may be formed of a plurality of flat surfaces. Thus, the curved surface 1064 may be piecewise flat. The curved surface 1064 may be a portion of a quasi-spherical surface comprising a plurality of facets or segments. Hence, the curved surface 1064 may be a portion of a surface of a polyhedron. An example of such polyhedron may be a truncated icosahedron. The plurality of light sources 1062 may be arranged on the facets. Each light source may be arranged such that the light source is configured to emit light in a direction substantially parallel to a normal of the associated facet. Each facet may be a flat surface having at least three sides. For instance, the curved surface 1064 may be formed of facets having five sides and facets having six sides (e.g., similar to an inner surface of a football or soccer ball). It is to be understood that each facet may be separate entities. Hence, the curved surface 1064 may be formed by a plurality of parts, and each facet may be formed by one or more parts. It is further to be understood that each part may include one or more facets. Further, such parts may be arranged in contact with neighboring parts or may be arranged at a distance from neighboring parts. A single part may include all facets.

Each light source of the plurality of light sources 1062 may be configured to illuminate the sample 1080 from one direction of a plurality of directions 1060. The plurality of light sources 1062 may comprise one or more adjustable light sources. One or more of a position, a direction of emitted light, a color of emitted light, and an intensity of emitted light of the one or more adjustable light sources may be adjustable. One or more light sources of the plurality of light sources 1062 may be configured to emit broad-spectrum light (i.e., white light or pseudo-white light). Alternatively, or additionally, one or more light sources of the plurality of light sources 1062 of may be configured to emit narrow-spectrum light (e.g. monochromatic light or quasi-monochromatic light). The light sources may be light-emitting diodes (LEDs). The LEDs may be white LEDs or colored LEDs. White LEDs may be formed by, e.g., blue LEDs covered in a layer of fluorescent material which when illuminated emits white light. By using white LEDs, the set of digital images may comprise information of the sample 1080 associated with a relatively broad range of wavelengths, especially in comparison when using narrow-band light (e.g., lasers, single-color LEDs, etc.). This may, in turn, allow the machine learning model to use more information about the sample 1080 either during training or when constructing a digital image depicting the sample. The LEDs may be any type of LED, such as ordinary LED bulbs (i.e. traditional and inorganic LEDs), graphene LEDs, or LEDs typically found in displays (e.g. quantum dot LEDs (QLEDs) or organic LEDs (OLEDs)). However, other types of LEDs may be used as well. The illumination subsystem 106 may, e.g., comprise a plurality of lasers, and the light emitted from each laser of the plurality of lasers may be converted to light with broader spectral bandwidth. An example of such conversion process may be referred to as supercontinuum generation. The light sources may emit incoherent light, quasi-coherent light, or coherent light.

At least one direction 1061 of the plurality of directions 1060 may correspond to an angle larger than the numerical aperture 1040 of the image-forming assembly 104 of the imaging system 100. The numerical aperture 1040 of the image-forming assembly 104 may be a dimensionless number associated with a range of angles over which the image-forming assembly 104 accepts light. Hence, a direction 1061 corresponding to an angle larger than the numerical aperture 1040 of the image-forming assembly 104 (e.g., direction 1064 in Fig. 1A) may be a direction 1061 corresponding to an angle outside of (e.g., larger than) the range of angles over which the image-forming assembly 104 accepts light. Since the sample 1080 is illuminated from a plurality of different directions, information regarding finer details of the training sample may be captured than what normally may be resolvable by the image-forming assembly 104 used to image the sample 1080. This can be understood as information of different portions of Fourier space (i.e., the spatial frequency domain) associated with the sample 1080 may be captured for different illumination directions. This technique may be known in the art as Fourier ptychography. Generally in Fourier ptychography, high spatial frequencies in Fourier space associated with a sample may be sampled when that sample is illuminated from a direction corresponding to a large angle of incidence. Hence, in case the sample 1080 is illuminated from a direction 1061 corresponding to an angle larger than the numerical aperture 1040 of the image-forming assembly 104, even higher spatial frequencies of the Fourier space associated with the sample 1080 may be sampled. This is possible since light is scattered by the sample 1080, and a portion of the light scattered by the sample 1080 may be collected by the image-forming assembly 104. Illuminating the sample 1080 from a plurality of directions 1060 may further allow information regarding a refractive index (or a spatial distribution of the refractive index) associated with the sample 1080 to be captured by the image-forming assembly 104. This can be understood as an effect of refraction of light being dependent on an angle of incident for light illuminating the sample 1080 and the refractive index of the sample 1080. Information regarding the refractive index of the sample 1080 may, in turn, allow phase information (typically referred to as quantitative phase within the art) associated with the sample 1080 to be determined. It is to be understood that the information relating to one or more of finer details of the sample 1080, refractive index associated with the sample 1080, and phase information associated with the sample 1080 may be captured by illuminating the sample 1080 from more than one direction of the plurality of directions 1060 at a time, for example from a subset of the plurality of directions 1060. The subset of the plurality of directions may comprise directions corresponding to non-overlapping portions of the Fourier space of the sample 1080. However, two or more directions of the plurality of directions 1060 may correspond to overlapping portions of a Fourier space associated with the sample 1080. For instance, two neighboring light sources of the plurality of light sources 1062 may be configured to emit light in directions corresponding to overlapping portions of the Fourier space associated with the sample 1080.

The functions which the circuitry 110 is configured to execute depends on whether the set of digital images is to be used when training the machine learning model (i.e., as a training set of digital images) or when using the trained machine learning model to construct a digital image depicting a sample (i.e. as an input set of digital images). However, for both of these purposes, the circuitry 110 is configured to execute an acquisition function 1120. The acquisition function 1120 is configured to acquire a set of digital images. To that end, the acquisition function 1120 is configured to control the illumination subsystem 106 to illuminate the sample 1080 with a plurality of illumination patterns, and to control the image sensor 102 to capture a digital image for each illumination pattern of the plurality of illumination patterns. Each digital image of the set of digital images may be associated with an illumination pattern of the plurality of illumination patterns. Each illumination pattern of the plurality of illumination patterns may, e.g., be formed by simultaneously illuminating the sample 1080 from one or more directions of the plurality of directions 1060, and/or by varying a number of light sources of plurality of light sources 1062 of the illumination subsystem 106 that emit light. Each illumination pattern of the plurality of illumination patterns may be formed by illuminating the sample 1080 from one or more directions corresponding to non-overlapping portions of the Fourier space associated with the sample 1080. For instance, each illumination pattern of the plurality of illumination patterns may be formed by illuminating the sample 1080 from only one direction of the plurality of directions 1060. Each illumination pattern of the plurality of illumination patterns may be formed by one or more light sources of the plurality of light sources 1062. Put differently, each illumination pattern of the plurality of illumination patterns may be formed by simultaneously emitting light from one or more light sources of the plurality of light sources 1062. However, two different illumination patterns of the plurality of illumination patterns may be formed by illuminating the sample 1080 from one or more directions corresponding to, at least partly, overlapping portions of the Fourier space associated with the sample 1080. By comprising a plurality of light sources 1062, the illumination subsystem 106 of the imaging system 100 may be able to switch between different illumination patterns quicker and/or more reliably compared to an illumination subsystem comprising a movable light source capable of illuminating a position from different directions. The sample 1080 may be illuminated under different illumination conditions (i.e., by using different illumination patterns), and more information (e.g., information associated with a refractive index, phase, and/or finer details) of the sample 1080 may be collected by capturing digital images of the sample 1080 when it is illuminated under the different illumination conditions.

Since the acquired set of digital images may comprise information associated with one or more of fine details of the sample 1080, a refractive index associated with the sample 1080, and phase information associated with the sample 1080, this information may be used by the machine learning model (either during training or when the trained machine learning model is used to construct a digital image depicting a sample. This may, in turn, allow for a trained machine learning model able to construct the digital image depicting the sample more accurately than what would be allowed in case the set of digital images was captured from only one direction. Put differently, it may allow for a trained machine learning model able to construct the digital image depicting a sample more accurately than what would be allowed in case the set of digital images was captured from only one direction or using a conventional microscope (e.g., using bright-field illumination).

The acquired set of digital images may be used as a training set of digital images when training a machine learning model to construct a digital image depicting a sample. In this context, the sample 1080 may be referred to as a training sample. In that case, the circuitry 110 is configured to execute a receiving function configured to receive a ground truth comprising a digital image depicting the sample 1080. However, the digital image of the ground truth is acquired using a second imaging system 200. In the following, the imaging system 100 of Fig. 1A may be referred to as the first imaging system 100. Figure 1B is a schematic illustration of the second imaging system 200. The second imaging system 200 may be different from the first imaging system 100. As is illustrated in the example of Fig. 1B, the second imaging system 200 may comprise one or more of an image sensor 202, an image-forming assembly 204, an illumination subsystem 206, and a sample positioning assembly 208. Even if the image sensor 202 of the second imaging system 200 is illustrated as a separate entity in Fig. 1B, it is to be understood that the image sensor 202 of the second imaging system 200 may form part of an electronic device such as a camera. As is seen in the example of Fig. 1B, the sample positioning assembly 208 of the second imaging system 200 may be configured to hold a sample 2080. Since the second imaging system 200 is used to capture the digital image of the ground truth to be used during training, the sample 2080 of Fig. 1B may be a training sample. The illumination subsystem 206 of the second imaging system 200 may comprise one or more light sources. The illumination subsystem 206 may, as illustrated in the example of Fig. 1B, comprise a conventional light source suitable for microscopy (e.g., bright-field microscopy). The illumination subsystem 206 may be configured to illuminate the training sample 2080 with a bright-field illumination pattern. Here, a bright-field illumination pattern may be an illumination patter similar to conventional microscope illumination. Such bright-field illumination pattern may be formed by a conventional light source suitable for microscopy. In that case, the bright-field illumination pattern may be very similar (or even identical to) conventional microscope illumination. However, it is to be understood that the illumination subsystem 106 in Fig. 1A may be used to form a bright-field illumination pattern. A bright-field illumination pattern similar to conventional microscope illumination may be formed by using a majority (or all) light sources of the illumination subsystem 106 of Fig. 1A. For instance, light sources of the illumination subsystem 106 of Fig. 1A emitting light in directions corresponding to angles smaller than (and, possibly, equal to) the numerical aperture 2040 of the image-forming assembly 204 of the second imaging system 200 illustrated in Fig. 2B may be used to form an illumination pattern similar to conventional microscope illumination. Using an illumination pattern similar to conventional microscope illumination may allow for digital images resembling the sample 2080 to be captured using the second imaging system 200.

Upon comparing Fig. 1A and Fig. 1B, it can be seen that the first imaging system 100 and the second imaging system 200 may be similar. However, a key difference is that the second imaging system 200 exhibits a lower level of imaging errors than the first imaging system 100. The different levels of imaging errors may be due to structural and/or technical differences between the first imaging system 100 and the second imaging system 200. For instance, the image-forming assembly 104 of the first imaging system 100 may be less complex (e.g., fewer components) than the image-forming assembly 204 of the second imaging system 200. Generally, image-forming assemblies may be designed to reduce imaging errors, however they thereby become more complex (i.e., comprising more components). Alternatively, or additionally, the components of the image-forming assembly 104 of the first imaging system 100 may be of lower quality than the components of the image-forming assembly 204 of the second imaging system 200. These differences, in turn, may reduce economical costs associated with the first imaging system 100 compared to the second imaging system 200.

The image-forming assembly 204 of the second imaging system 200 may exhibit a lower level of optical aberrations than the image-forming assembly 104 of the first imaging system 100. The optical aberrations may be one or more of: spherical aberration, astigmatism, coma, image distortion, chromatic aberration, and Petzval field curvature. The level of imaging errors of the first imaging system 100 may be associated with the level of optical aberrations of the image-forming assembly 104 of the first imaging system 100. The level of imaging errors of the second imaging system 500 may be associated with the level of optical aberrations of the image-forming assembly 204 of the second imaging system 200. An image of an object at best focus formed by the image-forming assembly 204 of the second imaging system 200 may thereby be more similar to the imaged object than an image of an object at best focus formed by the image-forming assembly 104 of the first imaging system 100. The image formed by the image-forming assembly 204 of the second imaging system 200 may, e.g., be sharper than a corresponding image formed by the image-forming assembly 104 of the first imaging system 100. An image of an object formed by the image-forming assembly 204 of the second imaging system 200 may be more similar to an ideal image of that object compared to an image of that object formed by the image-forming assembly 104 of the first imaging system 100. Within the art, an ideal image is an image formed by an aberration-free imaging system. In the context of this disclosure, the similarity between an image of an object formed by an image-forming assembly and the ideal image of that object this may be referred to as a quality of the image formed by the image-forming assembly. Hence, an image of higher quality of an object may be more similar to an ideal image of that object than what an image of lower quality of that object is.

A number of imaging elements of the image-forming assembly 104 of the first imaging system 100 may be lower than a number of imaging elements of the image-forming assembly 204 of the second imaging system 200, whereby the image-forming assembly 204 of the second imaging system 200 may have a lower level of optical aberrations than the image-forming assembly 104 of the first imaging system 100. Typically, complex image-forming assemblies (e.g., microscope objectives) comprises several imaging elements (e.g., optical lenses) arranged to reduce the level of optical aberrations. Therefore, reducing the number of imaging elements (e.g., lenses, etc.) of an image-forming assembly may increase the level of optical aberrations of that image-forming assembly. For instance, the image-forming assembly 204 of the second imaging system 200 may comprise a microscope objective. A microscope objective may comprise a complex arrangement of a plurality of optical lenses of different types. Typically, a microscope objective is designed for producing a magnified image of an object and for reducing (preferably minimize) imaging errors in order to produce a high-quality image of an object. However, such microscope objectives are typically associated with high economic costs. By using a microscope objective in the image-forming assembly 204 of the second imaging system 200, a quality and/or a resolution of the digital image of the ground truth may thereby be enhanced. Compared to the image-forming assembly 104 of the first imaging system 100, which is described in connection with Fig. 1A, the image-forming assembly 204 of the second imaging system 200 may be more complex (i.e., comprising a larger number of imaging elements). For instance, the image-forming assembly 104 of the first imaging system 100 may comprise a microscope objective of lower quality than the microscope objective of the image-forming assembly 204 of the second imaging system 200. As is illustrated in Fig. 1A, the image-forming assembly 104 of the first imaging system 100 may comprise one imaging element (e.g. an optical lens) only. An image produced by one imaging element only may be of lower quality than an image produced by the image-forming assembly 204 (e.g., a microscope objective) of the second imaging system 200.

Above, the lower level of imaging errors of the second imaging system 200 compared to the first imaging system 100 have been described as optical aberrations. However, it is to be understood that the present inventive concept is not limited to optical aberrations only. Alternatively, or in addition, the image sensor 202 of the second imaging system 200 may, compared to the image sensor 102 of the first imaging system 100, exhibit one or more of a larger number of pixels, a higher pixel resolution, a larger pixel size, a higher dynamic range, and a lower noise level. Hence, a digital image quality of digital images produced by the image sensor 202 of the second imaging system 200 may be higher than a digital image quality of digital images produced by the image sensor 102 of the first imaging system 100. This means that the image sensor 102 of the first imaging system 100 may be less economical expensive than the image sensor 202 of the second imaging system 200. As a further example, the sample positioning assembly 108 of the first imaging system 100 may be configured to move a sample along a first plane, and the sample positioning assembly 208 of the second imaging system 200 may be configured to move a sample along a second plane which may exhibit a higher degree of planarity than the first plane. Put differently, when the sample is moved, an accuracy and/or a repeatability of a focal position of the sample (i.e., the position of the sample relative to the image-forming assembly of the imaging system) may be higher for the second imaging system 200 compared to the first imaging system 100. Thus, the second imaging system 200 may be capable of positioning the sample 2080 in focus with a higher accuracy and/or better repeatability than the first imaging system 100. The sample positioning assembly 108 of the first imaging system 100 may thereby be less complex and/or less economical expensive than the sample positioning assembly 208 of the second imaging system 200.

It is to be understood that the second imaging system 200 may form part of a separate microscope arrangement. In that case, the training set of digital images may be acquired using the microscope arrangement 10 of Fig. 1A, and then the training sample 1080 may be moved to the separate microscope arrangement such that the second imaging system 200 may acquire the digital image of the ground truth. The sample 1080 may be moved automatically (e.g., by using motorized equipment) or manually between the first imaging system 100 and the second imaging system 200. It is, however, to be understood that the microscope arrangement 10 of Fig. 1A may comprise the first imaging system 100 and the second imaging system 200. In such case, the first and second imaging systems 100, 200 may be interchangeable. For example, the first imaging system 100 may be replaced by the second imaging system 200. Further, the first and second imaging systems 100, 200 may share one or more components. As a specific example, the first and second imaging systems 100, 200 may share image sensor, illumination subsystem, and sample positioning assembly. In that specific example, the image-forming assembly 104 of the first imaging system 100 is different from the image forming assembly 204 of the second imaging system 200. In case the first imaging system 100 and the second imaging system 200 share sample positioning assembly, the shared sample positioning assembly may be capable of moving the training sample between the first imaging system 100 and the second imaging system 200. For instance, the shared sample positioning system may be capable of moving the training sample between the first imaging system 100 and the second imaging system 200 such that the first image-forming assembly 104 may be used to acquire the training set of digital images and such that the second image-forming assembly 204 may be used to acquire the digital image of the ground truth. Alternatively, or additionally, the image-forming assemblies 104, 204 of the first and second imaging systems 100, 200 may be interchangeable. For instance, the image-forming assemblies 104, 204 of the first and second imaging systems 100, 200 may be mounted on a turret. The turret may be rotatable. Hence, depending on a current setting of the turret, either the first image-forming assembly 104 or the second image-forming assembly 204 may be in a position to image the training sample onto the (possibly shared) image sensor.

The acquired set of digital images may be used as a training set of digital images for training a machine learning model to construct a digital image depicting a sample. To that end, the circuitry 110 may be further configured to execute a training function 1128. The training function 1128 may be configured to train the machine learning model to construct a digital image depicting a sample using the acquired training set of digital images and the acquired ground truth. The training function 1128 may be configured to train the machine learning model to correlate the training set of digital images to the ground truth (e.g., the digital image depicting the training sample). The training function 1128 may be configured to train the machine learning model iteratively and/or recursively until a difference between an output of the machine learning model (i.e., the constructed digital image) and the ground truth (i.e., the digital image depicting the training sample) is smaller than a predetermined threshold. A smaller difference between the output of the machine learning model and the ground truth may indicate a higher accuracy of the constructed digital image provided by the machine learning model. Put differently, a smaller difference between the output of the machine learning model and the ground truth may indicate that the constructed digital image may to a higher degree replicate a digital image acquired using the second imaging system 200 and depicting the training sample. Hence, preferably, the difference between the output of the machine learning model and the ground truth may be minimized. The training function 1128 may be configured to train the machine learning model to construct digital images of samples for a plurality of different sample types. In such case, the machine learning model may, for each sample type, be trained using a training set of digital images of a training sample of the sample type, and a corresponding ground truth associated with the respective sample type.

The trained machine learning model may be capable of constructing, using an input set of digital images acquired using the first imaging system 100, a digital image depicting a sample and having a quality which is comparable (or identical) to a quality of a digital image acquired using the second imaging system 200 (e.g., the digital image of the ground truth used during training). Put differently, the trained machine learning model may, using the input set of digital images, construct a digital image depicting a sample and exhibiting a lower level of imaging errors than what the imaging system used to capture the input set of digital images normally is capable of. For instance, since the level of imaging errors (e.g., optical aberrations) is lower for the second imaging system 200 (i.e., in the digital image of the ground truth) compared to the first imaging system 100 (i.e., in the training set of digital images), the machine learning model may be trained to remove such imaging errors in its output (i.e., the constructed digital image).

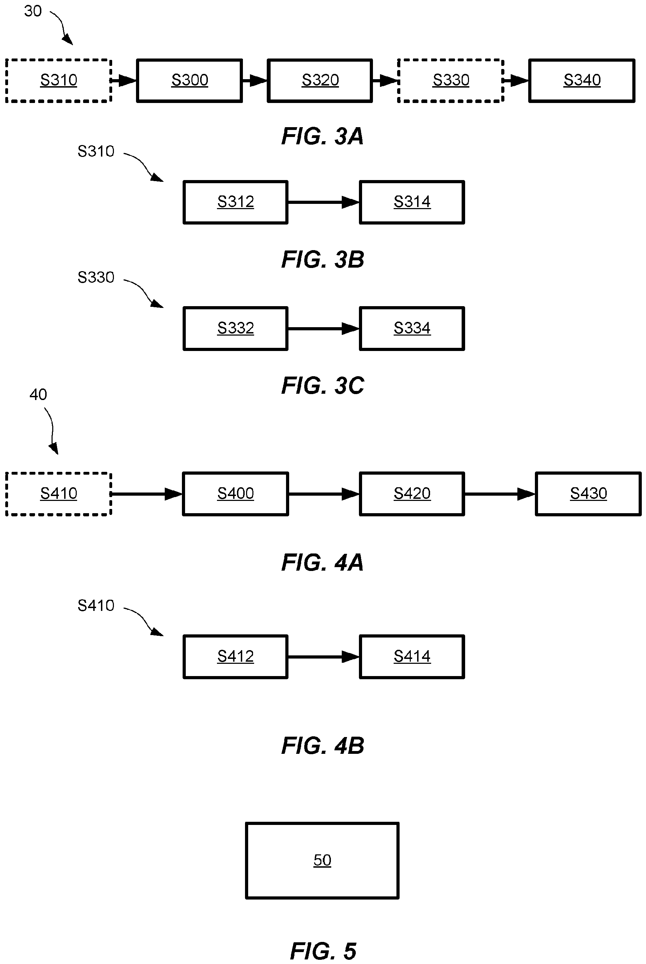

In case the acquired set of digital images is to be used as the input set of digital images for constructing a digital image depicting the sample using the trained machine learning model (e.g., trained in a manner similar to that described above and/or in connection with Fig. 2, Fig. 3A, or Fig. 3B). In that case, the circuitry 110 may be further configured to execute an image construction function 1122. The image construction function 1122 is configured to input the input set of digital images into the trained machine learning model, and receive, from the machine learning model, an output comprising the digital image depicting the sample 1080. Turning back to the microscope arrangement 10 of Fig. 1A. Since the image construction function 1122 is configured to use the trained machine learning model, the input set of digital images (i.e., the set of digital images acquired using the microscope arrangement 10 of Fig. 1A) can be acquired using a less complex and/or less expensive imaging system (e.g., the first imaging system 100), while the image construction function 1122 is able to construct a digital image depicting a sample which is similar to a digital image depicting the sample acquired using a more complex imaging system and/or a higher-quality imaging system (e.g., the second imaging system 200). For example, using a microscope objective (i.e., in case the image-forming assembly 204 of the second imaging system 200 comprises a microscope objective) for acquiring the digital image of the ground truth may allow for the trained machine learning model to construct a digital image having a higher quality and/or resolution from a set of relatively low-quality digital images (i.e., the digital images of the input set of digital images). As described above, the input set of digital images may be acquired using a less complex imaging system. For instance, that imaging system may comprise one imaging element (e.g., optical lens) only, and the trained machine learning model may use an input set of digital images acquired with such imaging system to construct a digital image which may be similar (or identical) to a digital image acquired using a microscope objective. Thus, the trained machine learning model may allow for a less complex and/or less expensive microscope arrangement 10 to be used for acquiring the input set of digital images, while still being able to construct a digital image depicting a sample which is similar to a digital image acquired using a more expensive microscope arrangement (e.g., a microscope arrangement comprising the second imaging system 200). Put differently, after that the machine learning model has been trained, the second imaging system 200 may no longer be needed in order to construct a high-quality digital image of the sample, since the first imaging system 100 is sufficient to acquire the input set of digital images.

Even though the training of the machine learning model has been described in connection with the microscope arrangement 10, it is to be understood that the training may be performed in a separate device 60. Figure 2 is a schematic illustration of a device 60 for training a machine learning model to construct a digital image depicting a sample. The device 60 of Fig. 2 may be a computing device (e.g., a computer, a server, a cloud server, a smartphone, etc.). The device 60 may comprise further components, for example input devices (mouse, keyboard, touchscreen, etc.) and/or a display. The device 60 comprises circuitry 610. The circuitry 610 illustrated in Fig. 2 may be similar to the circuitry 110 described in connection with Fig. 1A and Fig. 1B. Hence, the circuitry 610 illustrated in Fig. 2 may comprise one or more of a memory 612, a processing unit 614, a communication interface 616, and a data bus 618. The description of the corresponding features of the circuitry 110 of Fig. 1A and Fig. 1B, when applicable, apply to these features of circuitry 610 of Fig. 2. In order to avoid undue repetition, reference is made to the above. The circuitry 610 is configured to execute a first receiving function 6120, a second receiving function 6122, and a training function 6124. The first receiving function 6120 is configured to receive a training set of digital images. As described above, the set of digital images acquired using the microscope arrangement 10 illustrated in Fig. 1A may be used as the training set of digital images. Hence, the first receiving function 6120 may be configured to receive the training set of digital images from the circuitry 110 illustrated in Fig. 1A. It is however to be understood that the first receiving function 6120 may be configured to receive the training set of digital images from other sources as well. For instance, the training set of digital images may be stored on a remote device (e.g., a server, etc.) or on a local device (e.g., a computer, on the memory 612, etc.), and the first receiving function 6120 may be configured to receive the training set of digital images therefrom. The first receiving function 6120 may receive the training set of digital images via the communication interface 616. As further described above, the training set of digital images is acquired using the first imaging system 100, and by: illuminating a training sample with a plurality of illumination patterns, and capturing a digital image of the training sample for each illumination pattern of the plurality of illumination patterns. The second receiving function 6122 is configured to receive a ground truth comprising a digital image depicting the training sample. The digital image of the ground truth is acquired using the second imaging system 200. As described above, the second imaging system 200 exhibits a lower level of imaging errors than the first imaging system 100. The digital image of the ground truth may be acquired as described in connection with Fig. 1A and Fig. 1B. The second receiving function 6122 may be configured to receive the digital image of the ground truth from a microscope arrangement used to capture the digital image of the ground truth. For example, in case the microscope arrangement 10 of Fig. 1A (with the second imaging system 200 illustrated in Fig. 1B) is used to acquire the digital image of the ground truth, the second receiving function 6122 may be configured to receive the digital image of the ground truth from the circuitry 110 illustrated in Fig. 1A. It is however to be understood that the second receiving function 6122 may be configured to receive the digital image of the ground truth from other sources as well. For instance, the digital image of the ground truth may be stored on a remote device (e.g., a server, etc.) or on a local device (e.g., a computer, on the memory 612, etc.), and the second receiving function 6122 may be configured to receive the digital image of the ground truth therefrom. The second receiving function 6122 may receive the digital image of the ground truth via the communication interface 616. The training function 6124 is configured to train a machine learning model to construct a digital image depicting a sample using the received training set of digital images and the received ground truth. The training function 6124 of Fig. 2 may be configured to train the machine learning model in the same manner as the training function 1128 of Fig. 1A. In order to avoid unnecessary repetition, reference is made to the above.

Figure 3A is a box scheme of a method 30 for training a machine learning model to construct a digital image depicting a sample. The method 30 of Fig. 3A may be a computer-implemented method. The method 30 comprises receiving S300 a training set of digital images of a training sample. The training set of digital images is, as illustrated in Fig. 3B, acquired S310 using a first imaging system 100 by: illuminating S312 the training sample with a plurality of illumination patterns, and capturing S314 a digital image for each illumination pattern of the plurality of illumination patterns. It is to be understood that the method 30 may comprise acquiring S310 the training set of digital images. Hence, the method 30 may, as illustrated in Fig. 3B, further comprise acquiring S310 the training set of digital images using a first imaging system 100 by: illuminating S312 the training sample with a plurality of illumination patterns, and capturing S314 a digital image for each illumination pattern of the plurality of illumination patterns.

The method 30 further comprises receiving S320 a ground truth comprising a digital image depicting the training sample. The digital image of the ground truth is as illustrated in Fig. 3C, acquired S330 using a second imaging system 200 exhibiting a lower level of imaging errors than the first imaging system 100. The digital image of the ground truth may be acquired S330 using the second imaging system 200 by: illuminating S332 the training sample with a bright-field illumination pattern, and capturing S334 the digital image while the training sample is illuminated with the bright-field illumination pattern. The bright-field illumination pattern may be an illumination pattern which is similar (or identical to) illumination provided by a conventional light source. The bright-field illumination pattern may be formed by a conventional light source (e.g., a conventional light source suitable for microscopy). It is to be understood that the method 30 may comprise acquiring S330 the digital image of the ground truth. Hence, the method 30 may, as illustrated in Fig. 3C, further comprise acquiring S330 the digital image of the ground truth using a second imaging system 200 by: illuminating S332 the training sample with a bright-field illumination pattern, and capturing S334 the digital image of the ground truth while the training sample is illuminated with the bright-field illumination pattern.

The method 30 further comprises training S340 the machine learning model to construct a digital image depicting a sample using the received training set of digital images and the received ground truth.

An image-forming assembly 204 of the second imaging system 200 may exhibit a lower level of optical aberrations than an image-forming assembly 104 of the first imaging system 100, whereby an image of an object at best focus formed by the image-forming assembly 204 of the second imaging system 200 may be more similar to the imaged object than an image of an object at best focus formed by the image-forming assembly 104 of the first imaging system 100. A number of imaging elements of the image-forming assembly 104 of the first imaging system 100 may be lower than a number of imaging elements of the image-forming assembly 204 of the second imaging system 200, whereby the image-forming assembly 204 of the second imaging system 200 may have a lower level of optical aberrations than the image-forming assembly 104 of the first imaging system 100. The image-forming assembly 204 of the second imaging system 200 may comprise a microscope objective. The image-forming assembly 104 of the first imaging system 100 may comprise one imaging element only. The optical aberrations may be one or more of: spherical aberration; astigmatism; coma; image distortion; chromatic aberration; and Petzval field curvature. An image sensor 202 of the second imaging system 200 compared to an image sensor 102 of the first imaging system 100 may exhibit one or more of: a larger number of pixels; a higher pixel resolution; a larger pixel size; a higher dynamic range; and a lower noise level. The first imaging system 100 may comprise a sample positioning assembly 108 configured to move a sample along a first plane, and the second imaging system 200 may comprise a sample positioning assembly 208 configured to move a sample along a second plane which may exhibit a higher degree of planarity than the first plane. The first imaging system 100 may comprise an illumination subsystem 106. The illumination subsystem 106 may comprise a plurality of light sources 1062, each light source of the plurality of light sources 1062 may be configured to illuminate the training sample 1080 from one direction of a plurality of directions 1060. Each illumination pattern of the plurality of illumination patterns may be formed by one or more light sources of the plurality of light sources 1062. At least one direction 1061 of the plurality of directions 1060 may correspond to an angle larger than a numerical aperture 1040 of an image-forming assembly 104 of the first imaging system 100. Two or more directions of the plurality of directions 1060 may correspond to overlapping portions of a Fourier space associated with the training sample 1080, and wherein each illumination pattern of the plurality of illumination patterns may be formed by illuminating the training sample 1080 from one or more directions corresponding to non-overlapping portions of the Fourier space associated with the training sample 1080. The method 30 of Fig. 3A, Fig. 3B, and/or Fig. 3C may be performed using the microscope arrangement 10 illustrated in Fig. 1A and Fig. 1B.

Figure 4A is a block scheme of a method 40 for constructing a digital image depicting a sample. The method 40 of Fig. 4A may be a computer-implemented method. The method 40 comprises receiving S400 an input set of digital images of a sample. The input set of digital images is, as illustrated in Fig. 4B, acquired S410 using an imaging system and by: illuminating S412 the sample with a plurality of illumination patterns, and capturing S414 a digital image for each illumination pattern of the plurality of illumination patterns. It is to be understood that the method 40 may comprise acquiring S410 the input set of digital images. Hence, the method 40 may, as illustrated in Fig. 4B, further comprise acquiring S410 the input set of digital images using an imaging system by: illuminating S412 the sample with a plurality of illumination patterns, and capturing S414 a digital image for each illumination pattern of the plurality of illumination patterns. The method 40 further comprises inputting S420 the input set of digital images into a machine learning model trained according to the method 30 described previously. The method 40 further comprises receiving S430, from the machine learning model, an output comprising the digital image depicting the sample. The method 40 of Fig. 4A, and/or Fig. 4B may be performed using the microscope arrangement 10 illustrated in Fig. 1A and Fig. 1B or using the device 60 illustrated in Fig. 2.

Figure 5 is a schematic illustration of a non-transitory computer-readable storage medium 50. The non-transitory computer-readable storage medium 50 comprises program code portions which, when executed on a device having processing capabilities, performs the method 30 illustrated in Fig. 3A or the method 40 illustrated in Fig. 4A.

A skilled person would be aware of machine learning, and in particular as to how a machine learning model may be trained and/or how a trained machine learning model may be used. However, in brief, the machine learning model may be a type of supervised machine learning model, for example a network such as U-net or Pix2pix. The machine learning model may be a transformer-based network such as SwinIR. The machine learning model may be a convolutional neural network. The machine learning model may be trained to predict a desired output using example input training data and a ground truth, i.e. the "correct" or "true" output. Put differently, the ground truth may be used as a label for the input training data. The input training data may comprise data pertaining to different outcomes, and each input training data may thereby be associated with a ground truth associated with that particular input training data. Hence, each input training data may be labelled with an associated ground truth (i.e., "correct" or "true" output). The machine learning model may comprise a plurality of layers of neurons, and each neuron may represent a mathematical operation which is applied to the input training data. Typically, the machine learning model comprises an input layer, one or more hidden layers, and an output layer. The first layer may be referred to as the input layer. The output of each layer (except the output layer) in the machine learning model may be fed to a subsequent layer, which in turn produces a new output. The new output may be fed to a further subsequent layer. The output of the machine learning model may be an output of the output layer. The process may be repeated for all layers in the machine learning model. Typically, each layer further comprises an activation function. The activation function may further define the output of a neuron of the layer. For example, the activation function may ensure that the output from a layer is not too large or too small (e.g., tending towards positive or negative infinity). Further, the activation function may introduce non-linearity into the machine learning model. During the training process, weights and/or biases associated with the neurons of the layers may be adjusted until the machine learning model produces predictions for the input training data that reflect the ground truth. Each neuron may be configured to multiply the input to the neuron with a weight associated with that neuron. Each neuron may be further configured to add a bias associated with that neuron to the input. Put differently, an output from a neuron may be a sum of the bias associated with the neuron and a product of the weight associated with the neuron and the input. The weights and biases may be adjusted in a recursive process and/or an iterative process. This may be known as backpropagation within the art. A convolutional neural network may be a type of neural network comprising one or more layers that represents a convolution operation. In this context, the input training data comprises digital images. A digital image may be represented as matrix (or as an array), and each element in the matrix (or array) may represent a corresponding pixel of the digital image. The value of an element may thereby represent a pixel value and/or color value of the corresponding pixel in the digital image. Hence, the input and output to the machine learning model may be numerical (e.g., a matrix or an array) representing digital images. In this context, the input is a set of digital images (i.e., the training set or the input set). Thus, the input to the machine learning model may be a plurality of matrices, or a three-dimensional matrix. It is, however, to be understood that the machine learning model may take further input during training. In this specific case, the machine learning model is trained using a training set of digital images and a ground truth. The first training set of digital images is acquired in a manner similar to the acquisition of the first input set of digital images. Put differently, the illumination patterns used when acquiring the training set of digital images and the input set of digital images may be similar or identical. The machine learning model may be trained using the training set of digital images as input and the ground truth as the desired output. Put differently, the machine learning model may be trained until a difference between an output of the machine learning model and the ground truth is smaller than a threshold. This difference may within the art be described by a loss function. It may be preferred to train the machine learning model until the loss function is minimized. Put differently, the machine learning model may be trained until the difference between the output of the machine learning model and the ground truth is minimized. The training process may be repeated for a plurality of different training samples (e.g., different training samples of the same and/or of different types), which may allow for the machine learning model to construct digital images of a wider range of sample types and/or with higher accuracy.

The person skilled in the art realizes that the present inventive concept by no means is limited to the preferred variants described above. On the contrary, many modifications and variations are possible within the scope of the appended claims.

For example, even though it is illustrated in Fig. 1 that the training sample (or sample) is illuminated with the plurality of illumination patterns from one side (i.e. the side facing the illumination subsystem 106 in Fig. 1) and imaged from the opposite side (i.e., the side facing the image-forming assembly 104 in Fig. 1), it is to be understood that the training sample (or sample) may be illuminated with the plurality of illumination patterns on one side and imaged from the same side. For instance, the sample in Fig. 1 may be illuminated on the side facing the image-forming assembly 104. It is further to be understood that an illumination pattern may be formed by illuminating the training sample (or sample) from only one side of the sample at the time or by illuminating the training sample (or sample) from two opposite sides of the sample at the time.

Additionally, variations to the disclosed variants can be understood and effected by the skilled person in practicing the claimed invention, from a study of the drawings, the disclosure, and the appended claims.

## Claims

1. A method (30) for training a machine learning model to construct a digital image depicting a sample, the method comprising:
receiving (S300) a training set of digital images of a training sample, wherein the training set of digital images is acquired (S310) using a first imaging system (100) by:
illuminating (S312) the training sample with a plurality of illumination patterns, and
capturing (S314) a digital image for each illumination pattern of the plurality of illumination patterns;
receiving (S320) a ground truth comprising a digital image depicting the training sample, wherein the digital image of the ground truth is acquired (S330) using a second imaging system (200) exhibiting a lower level of imaging errors than the first imaging system (100); and
training (S340) the machine learning model to construct a digital image depicting a sample using the received training set of digital images and the received ground truth.

2. The method (30) according to claim 1, wherein an image-forming assembly (204) of the second imaging system (200) exhibits a lower level of optical aberrations than an image-forming assembly (104) of the first imaging system (100), whereby an image of an object at best focus formed by the image-forming assembly (204) of the second imaging system (200) is more similar to the imaged object than an image of an object at best focus formed by the image-forming assembly (104) of the first imaging system (100).

3. The method (30) according to claim 2, wherein a number of imaging elements of the image-forming assembly (104) of the first imaging system (100) is lower than a number of imaging elements of the image-forming assembly (204) of the second imaging system (200), whereby the image-forming assembly (204) of the second imaging system (200) has a lower level of optical aberrations than the image-forming assembly (104) of the first imaging system (100).

4. The method (30) according to claim 2 or 3, wherein the image-forming assembly (204) of the second imaging system (200) comprises a microscope objective.

5. The method (30) according to any one of claims 2-4, wherein the image-forming assembly (104) of the first imaging system (100) comprises one imaging element only.

6. The method (30) according to any one of claim 2-5, wherein the optical aberrations are one or more of:
spherical aberration;
astigmatism;
coma;
image distortion;
chromatic aberration; and
Petzval field curvature.

7. The method (30) according to any one of claims 1-6, wherein an image sensor (202) of the second imaging system (200) compared to an image sensor (102) of the first imaging system (100) exhibits one or more of:
a larger number of pixels;
a higher pixel resolution;
a larger pixel size;
a higher dynamic range; and
a lower noise level.

8. The method (30) according to any one of claims 1-7, wherein the first imaging system (100) comprises a sample positioning assembly (108) configured to move a sample (1080) along a first plane, and the second imaging system (200) comprises a sample positioning assembly (208) configured to move a sample (2080) along a second plane which exhibits a higher degree of planarity than the first plane.

9. The method (30) according to any one of claims 1-8, wherein the first imaging system (100) comprises an illumination subsystem (106), the illumination subsystem (106) comprising a plurality of light sources (1062), each light source of the plurality of light sources (1062) is configured to illuminate the training sample (1080) from one direction of a plurality of directions (1060); and
wherein each illumination pattern of the plurality of illumination patterns is formed by one or more light sources of the plurality of light sources (1062).

10. The method (30) according to claim 9, wherein at least one direction (1061) of the plurality of directions (1060) corresponds to an angle larger than a numerical aperture (1040) of an image-forming assembly (104) of the first imaging system (100).

11. The method (30) according to any one of claims 9 or 10, wherein two or more directions of the plurality of directions (1060) correspond to overlapping portions of a Fourier space associated with the training sample (1080), and wherein each illumination pattern of the plurality of illumination patterns is formed by illuminating the training sample (1080) from one or more directions corresponding to non-overlapping portions of the Fourier space associated with the training sample (1080).

12. A method (40) for constructing a digital image depicting a sample, the method comprising:
receiving (S400) an input set of digital images of a sample (1080), wherein the input set of digital images is acquired (S410) using an imaging system (100) and by:
illuminating (S412) the sample (1080) with a plurality of illumination patterns, and
capturing (S414) a digital image for each illumination pattern of the plurality of illumination patterns;
inputting (S420) the input set of digital images into a machine learning model trained according to the method (30) of any one of claims 1-11; and
receiving (S430), from the machine learning model, an output comprising the digital image depicting the sample (1080).

13. A device (20) for training a machine learning model to construct a digital image depicting a sample, the device (20) comprising circuitry (210) configured to execute:
a first receiving function (2100) configured to receive a training set of digital images, wherein the training set of digital images is acquired using a first imaging system (100) and by: illuminating a training sample (1080) with a plurality of illumination patterns, and capturing a digital image of the training sample for each illumination pattern of the plurality of illumination patterns;
a second receiving function (2102) configured to receive a ground truth comprising a digital image depicting the training sample, wherein the digital image of the ground truth is acquired using a second imaging system (200) exhibiting a lower level of imaging errors than the first imaging system (100); and
a training function (2104) configured to train a machine learning model to construct a digital image depicting a sample using the received training set of digital images and the received ground truth.

14. A microscope arrangement (10) comprising:
an imaging system (100) comprising:
an image sensor (102),
an image-forming assembly (104) configured to image a sample (1080) onto the image sensor (102), and
an illumination subsystem (106) configured to illuminate the sample (1080) from a plurality of directions; and
circuitry (110) configured to execute:
an acquisition function (1120) configured to acquire an input set of digital images by being configured to:
control the illumination subsystem (106) to illuminate the sample (1080) with a plurality of illumination patterns, and
control the image sensor (102) to capture a digital image for each illumination pattern of the plurality of illumination patterns; and
an image construction function (1122) configured to:
input the input set of digital images into a machine learning model being trained according to the method (30) of any one of claims 1-11, and
receive, from the machine learning model, an output comprising the digital image depicting the sample (1080).

15. A non-transitory computer-readable storage medium (50) comprising program code portions which, when executed on a device having processing capabilities, performs the method (30, 40) according to any one of claims 1-11 or the method according to claim 12.
